# EUROPEAN PATENT APPLICATION

(11) **EP 2 322 294 A1**
(43) Date of publication of application: **18.05.2011**
(21) Application number: 09176000.9
(22) Date of filing: 13.11.2009
(51) Int. Cl.: B09C 1/00, B09C 1/10, E02B 1/00

(54) **System for injecting bioactive compounds into underwater sediments.**

(71) Applicant: Biorem Engineering SARL, 62780 France (FR)
(72) Inventor: De Windt, Wim, 9040 Sint-Amandsberg (BE); Lakaye, Frédéric, 4121 Neuville-en-Condroz (BE); Ernotte, Jonathan, 4633 Melen (BE)
(74) Representative: Vandeberg, Marie-Paule L.G.

(57) **Abstract**

A system for continuous injection of compounds into an underwater sediment volume (6) which comprises: a mixing tank (8), a pump, an injection line, apparatus (1) for continuous injection of compounds. The latter comprises a main support member (4, 10), a framework (14) supporting a collection ramp (16) fitted with injection lines (18) and harrowing means (24), bearing means (36) supporting the framework (14) above the sediment volume (6) and floating means (36) allowing the framework to remain at the surface of the sediment volume (6).

## Description

### Field of the invention

The invention concerns a system for the injection of compounds and more precisely bioactive compounds into underwater sediments. The apparatus is particularly aimed at sediments situated up to 20 metres or more below the surface of water bodies, i. a. in lakes, rivers, harbours, etc.

The invention also relates to a method for treatment of underwater sediments using this system.

### Description of prior art

An object of the invention is to develop the possibility to proceed to in situ treatment of sediments with treatment or curing compounds in order to bring about a decrease of the sediment volume or height.

Another object of the invention is to improve decontamination of the sediment for pollution reduction of toxic or carcinogenic materials. In situ treatment for decontamination or volume reduction of sediments relies on the biological or physicochemical action of the injected products and is now considered as an economical and eco-friendly alternative for dredging or ex situ decontamination of sediment volumes, since transport and treatment costs can generally be reduced by a factor 5 to 10.

However, efficacy of the injected products has to be accompanied by an effective and tailor-made injection system that allows the treatment or curing compound to be injected under optimal conditions and be mixed intimately into the sediment matrix.

The present invention provides an effective injection apparatus for these applications and limits some of the inconveniences that exist in other systems described in the prior art.

Such an apparatus is described e.g. in US-5 481 815. The apparatus provides a plurality of injection sites for injecting a biochemical oxidant into sediments. The injection system is supported by a series of resilient fingers that maintain the apparatus deep under the sediment surface. Using such an apparatus is tricky because it is virtually impossible to determine the depth of the injection site.

US 6 350 383 describe a method for removal of environmental oxidations which implies dispersion of a substrate such as clay at the surface of or into sediment.

US 4 244 664 describes a method and apparatus for solidifying underwater mud, the apparatus comprising a series of vertically or horizontally placed endless screw of the Auger type. Using such an apparatus does not take into account the environmental problems and the quality of the water (dispersion of the sediment).

US 2006/0051162 describe a rotating cylindrical containment tool that removes sediments and prevents the dispersion of contaminated sediments during excavation. The process is lengthy and not adapted to in-situ surface treatment of sediments.

US 5 810 514 describes a method for fracturing a contaminated soil with a sudden, explosive blast of a preselected pure compressed gas encouraging activity of organism already within or introduced into a medium. Such a method would cause sediments to be dispersed back into water and a waste of active agent.

US 5 146 997 relates to an equipment for removing weeds and more particularly to a tiller having a submersible portion for grubbing weeds from a lake bottom. Such equipment is not suitable for treating deep underwater sediment.

### Summary of the invention

A first subject of the invention is an apparatus for continuous injection of compounds into an underwater sediment volume situated below the surface of a water body.

This apparatus comprises at least one mixing tank, at least one pump, at least one injection line, a main support member and a framework which supports at least one collection ramp fitted with injection lines and harrowing means. Bearing means support the framework above the sediment volume, and floating means allow the framework to remain at the surface of the sediment volume.

According to a preferred embodiment, the apparatus is protected by an upper shell and two lateral steel plates that cut into the sediment surface. The upper shell advantageously comprises at least one rubber cap.

The apparatus preferably comprises a heating element for heating the component before its injection.

The harrowing means advantageously comprise a series of rotary harrows with substantially vertical teeth.

According to an advantageous embodiment, the bearing means are rolls placed in front of and at the back of the framework. The rolls are preferably filled at least partially with a fluid whose density is lower than the density of water and constitute the floating means.

The heating element is preferably enclosed in the mixing tank.

The mixing tank is advantageously double-enveloped and contains a heat transfer fluid able to heat the product up to a temperature between 10 and 30°C.

The apparatus is advantageously affixed aboard a floating vessel.

A further subject of the invention is a process for curing underwater sediments which comprises the following operations:
- mixing, homogenizing and heating a compound comprising at least one active product so as to obtain optimal rheological properties, viscosity and pumpability of the compound;
- providing a mobile injection apparatus able to be displaced along the surface of underwater sediments to be cured;
- adjusting the floatability of the mobile injection apparatus so that it will remain close to the surface of the underwater sediments;
- adjusting the position of bearing elements borne by the mobile injection apparatus so that the latter stays at a given distance above the surface of the underwater sediments;
- providing an injection line extending between said mobile apparatus and the surface of a water body;
- Pumping the mixed compound into the injection line;
- Collecting said compound in the mobile apparatus;
- Injecting said compound into an upper layer of the sediments;
- stirring said upper layer with harrowing means so as to obtain an intimate mixing of the sediment and of the active compound.

The compound preferably comprises at least one active ingredient chosen amongst [biological formulations, bacterial mixtures, polymers, suspensions, sludges, nutrients, minerals, chemicals for in situ detoxification of sediments contaminated by heavy metals, polychlorinated biphenyls, pesticides, organochlorides, slow-release oxygen formulations to oxidize organic materials in sediments].

### Short description of the drawings

These and further aspects of the invention will be explained in greater detail by way of example and with reference to the accompanying drawings in which:
Fig.1 is a general lateral view of a vessel fitted with
   the apparatus of the invention;
Fig.2 is a general lateral view of the vessel of Fig. 1
   with the apparatus lifted above water;
Fig.3 is a more detailed lateral cut view according to
   plane I-I of the apparatus disclosed in Fig. 1;
Fig.4 is a lateral cut-view of the mixing tank;
Fig.5 is a front view of the apparatus of Fig. 3 with
   partly ripped-off upper shell;
Fig.6 is a plan view of the apparatus of Fig. 3 with partly ripped-off upper shell;

The figures are not drawn to scale. Generally, identical components are denoted by the same reference numerals in the figures.

### Detailed description of preferred embodiments

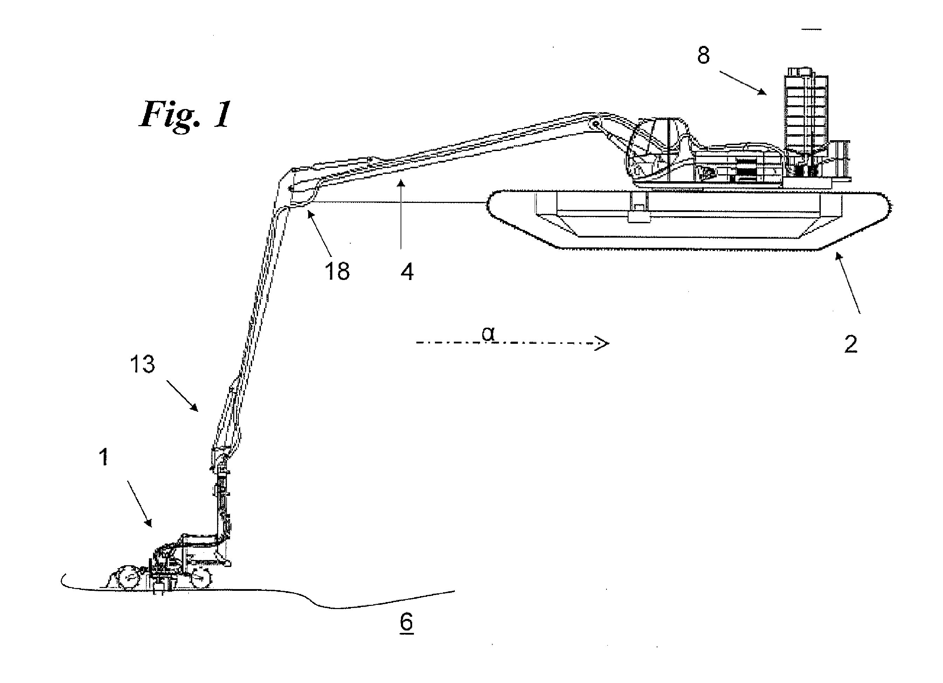

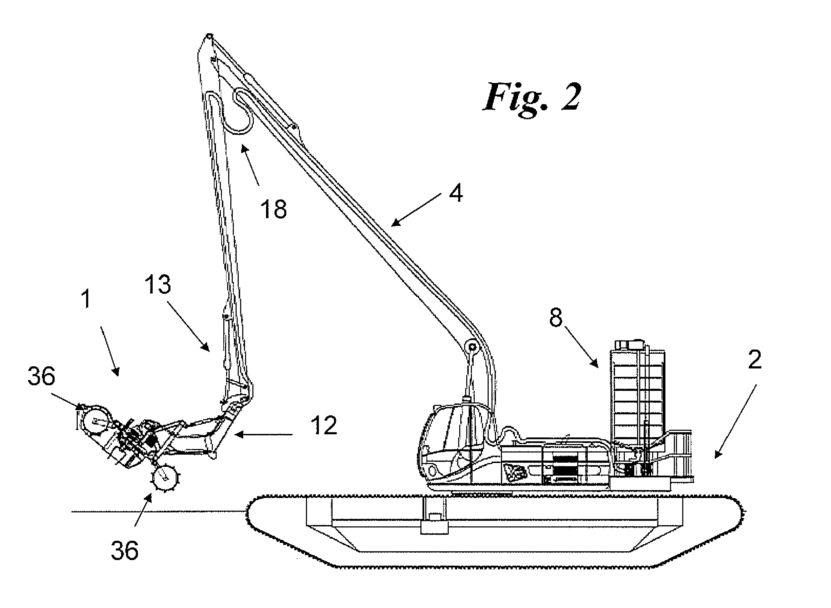

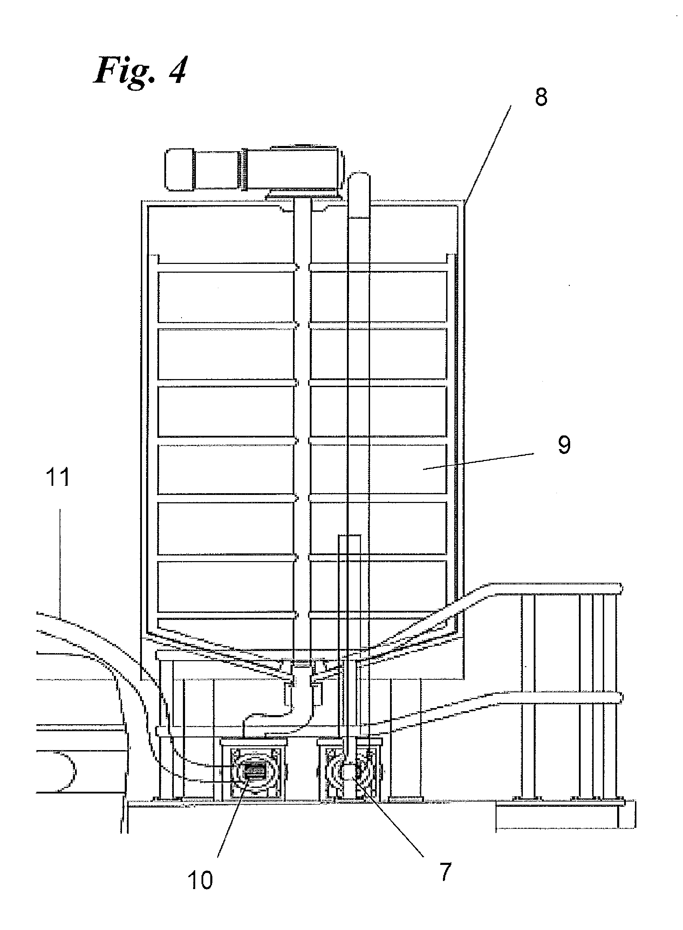

Figure 1 illustrates an injection apparatus 1 according to the invention driven from a moving vessel 2, as described for example in US 7,588,106 floating at the surface of a water body. The apparatus 1 is fitted atop a hydraulic boom 4 able to allow the injection apparatus to reach the bottom of the water body, typically 20 metres or more below the water surface, so as to treat a layer of sediments 6 covering said bottom. The vessel 2, propelled, for example by two or more turbines, is equipped with a positioning system comprising a sonar, a GPS RTK receiver and on-board software and hardware. A mixing tank 8 (represented in cut-view at Fig. 4) is installed aboard the moving vessel 2. This mixing tank 8 is filled up via a plurality of filling pumps 7 with the various components (including treatment or curing products) which, after mixing, will form an active compound to be injected into the sediment layer 6. An impeller 9 homogenizes the compound in the mixing tank 8 before it is pumped into the sediment 6, the compound being further heated up to a temperature roughly between 10 - 30°C in order to increase its pumpability and to reach optimized rheological properties. Optimized rheological properties allow for a more accurate dosage of the injected products, since better flow characteristics reduce head losses during pumping, injection and mixing process. A positive displacement pump (as, for example, a Moineau pump) 10 is installed close to the mixing vessel and pumps the compound into an injection tube 11. The injection tube 11 has a heated (or at least insulated) envelope to maintain the compound temperature and thus rheology during its passage throughout the tube, and follows a path starting from the top of the floating vessel 2, continuing along the hydraulic boom 4, and ending into an intermediary reservoir incorporated in the injection apparatus 1. The injection apparatus 1 is movably fastened to a sensibly vertical frame extension 12, affixed to the end of the hydraulic boom 4. The frame extension 12 can have a length comprised between 1 and 5 metres and allows the injection apparatus 1 to either traverse the irregular surface of the sediment or be lifted from the sediment surface 6 by actuating a hydraulic cylinder 13 extending between the boom and the vertical frame extension 12. At least one adjustable spacer 14, placed between a framework 15 supporting the various elements of the injection apparatus 1 and the vertical frame extension 12 allow, in conjunction with the hydraulic cylinder 13 a +/-20-50 ° tilt of the frame extension 12 (see Fig.2) and subsequently of a plane determined by the framework 15.

More details about the injection apparatus 1 of the invention will now be given in relationship with the description of a multi-steps process that is carried out during its use.

### Step 1: Mixing

Pre-mixing the compound in the mixing tank 8 mounted onto the floating vessel 2 guarantees that the active compound is homogeneous when injected. The overall capacity of the mixing tank (e.g. 2 m³) is generally calculated so that it is able to contain a volume of compound corresponding to one day of curing work. The various components of the active compound are sucked up from (not shown) secondary tanks by filling pumps 7, which are generally also Moineau pumps. To facilitate the pumping of the product, the mixing tank 8 is generally equipped with a double barrier containing heating elements as a heat exchanger, in order to heat the product and thus allow the viscosity of the compound to diminish. Compounds containing significant quantities of water are also withheld from freezing during applications in winter.

### Step 2: Pumping

The product is pumped from the mixing tank into an injection line (or hose or tube) 11 containing flexible parts, fixed to the boom 4. Flexibility is required in certain parts of the tubing 11 to allow movements of the hydraulic boom 4. The injection line 11 is either heat-insulated or contains heating elements for maintaining the compound temperature during its transfer.

### Step 3: Injection

The compound is distributed over the sediment volume 6 to be treated by the injection apparatus or tool 1. The latter comprises a hollow, horizontal collection ramp 16 extending normal to the displacement axis of the apparatus (see arrow α on Fig. 1) and which serves as a temporary buffer for storage and collection of the product. The man skilled in the art will understand that, according to the nature of the sediment, the speed of travel and the dimensions of the apparatus, the latter may comprise a plurality of parallel extending collection ramps. A collection ramp 16 may indeed have a length of, for example, 3 to 5 m. It is pierced by openings at regular intervals over this length. Flexible vertical injection lines 18 (100 to 300 mm long) are screwed into these openings. At the end of each injection line 18 is attached a metallic piece with a narrow inner diameter (e.g. a nozzle) 20, in order to increase the compound ejection speed. Further to be flexible, each injection line 18 is protected from damage by rocks, branches, or other debris lying at the sediment surface 6 by a vertical metal plate 28 extending in front of it and acting as a plough.

### Step 4: Distribution/Spreading

The axis of each injection line 18 is aligned with the axis of a corresponding rotary harrow 24 provided with substantially vertical teeth 26, which stir the upper layer of sediment 6 just after injection of the active compound.

This implies that the injection lines 18 are placed towards the front part of the injection apparatus 1.

Each injection line 18 is prevented from bending into the action radius of the rotary harrow teeth by means of a protective plate 28.

As shown in Figure 2, as soon as the compound has left an injection line 18 and been incorporated in the sediment 6 surface layer, it is evenly distributed in this surface layer by the action of the corresponding rotary harrow 24, which form a part of the spreading system 30. The spreading system 30 comprises a series of rotary harrows driven, via a gearbox 32, by a hydraulic engine 34. As it is apparent from Fig. 4, the paths of the harrows overlap, so as to ensure an even distribution of the compound. The fluid under pressure needed to activate the hydraulic engine 34 is fed from a hydraulic pump installed on the floating vessel 2. The hydraulic engine and gearbox are protected from water by a watertight body housing 35 which is preferably filled with an inert gas as e.g. nitrogen to avoid corrosion problems. The collection ramp 16 can be positioned in front of and/or behind the spreading system depending on the motion sense of the apparatus 1. If required, the harrows may be placed in staggered rows.

Other harrowing means can be used to distribute evenly the active products in the top layer of sediments.

The hydraulic pump is driven by the power taken off from a main combustion engine installed onto the floating vessel. All additional equipments installed on the apparatus (pumps, mixing elements, and so on) are also driven by hydraulic engine(s), which even may drive the turbine(s) of the vessel 2.

The hydraulic fluid is generally oil. To improve environmental protection and avoid pollution problems in case of leak, biodegradable oil is preferred. The pressure and flow rate of the hydraulic oil are adjusted so that the teeth 26 of the rotary harrow 24 rotate at a speed of 150 - 300 rpm.

### Step 5: Surface distribution

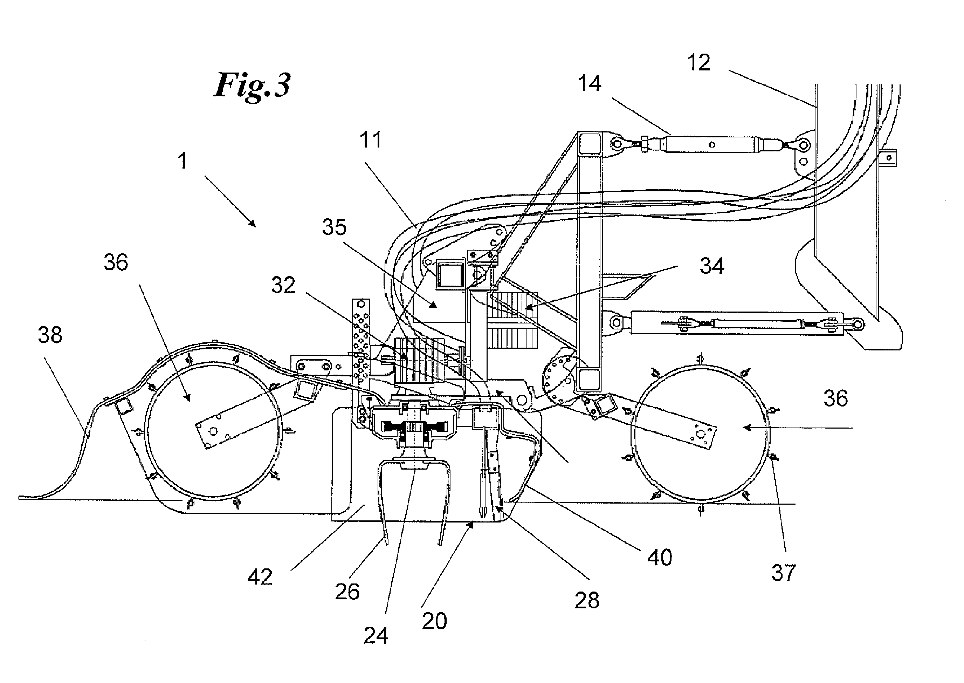

As it appears on Fig. 3 and 4, the rotary harrow, which has here a width of about 3 m, is equipped with 12 sets of rotating harrows 24.

The teeth 26 of each rotary harrow 24 are placed at 90° of the teeth 26 of the next one, so that they never meet though their movements are intertwined.

While the floating vessel 2 slowly moves by means of the turbine action, at a speed generally comprised between 0.3 and 10 km/h, the boom 4 drags or pushes the injection tool 1 over the sediment surface of the whole water body to be treated. The active compound is thus spread over the whole sediment surface by the injection lines 18, and, immediately after its injection, is homogenized into the sediment matrix by the rotary harrows action. Thanks to the data recorded by the positioning software and GPS RTK, zones which have been treated are well distinguishable from zones where no product has been injected.

The rotary harrow teeth 26 are positioned at a given depth below the sediment surface 6 to allow an optimized homogenization of the compound over the required sediment volume.

For injection, for example at a 15 cm depth, the lowest position of the teeth is set at -15 cm below the sediment surface reference level, while the nozzles 20 of the injection lines 18 are adjusted between 0 and 10 cm below the sediment surface reference level.

As the active compound may be pretty dear, it is important not to waste it, i.a. by injecting it too deep into the sediment 6. A high-resolution sonar working at high frequencies is thus generally used to ensure a proper location of the water-sediment interface.

The weight of the injection apparatus 1, comprising the injection lines 18 and the distribution system bearing the rotary harrows 24, is carried by two rolls 36, filled at least partially with a fluid lighter than water (for example air), installed respectively in front of and behind the injection apparatus 1. The rolls 36 are made for example of stainless steel and their exterior surfaces bear profiles 37, in order to enhance the grip on the sediment surface and hence cause rotation of the rolls 36 instead of them being dragged along the sediment.

The rolls' function is to make optimal use of the Archimedes' principle in order to avoid sinking of the injection tool 1 too deep below the sediment surface, but they are designed to avoid the sediment 6 being stirred and put back in suspension in the water.

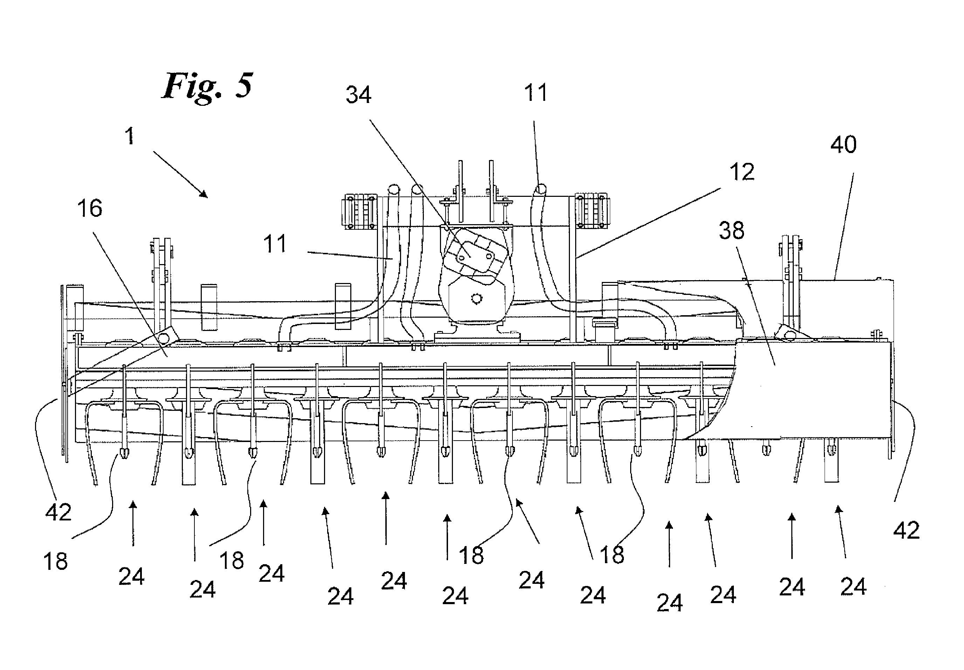

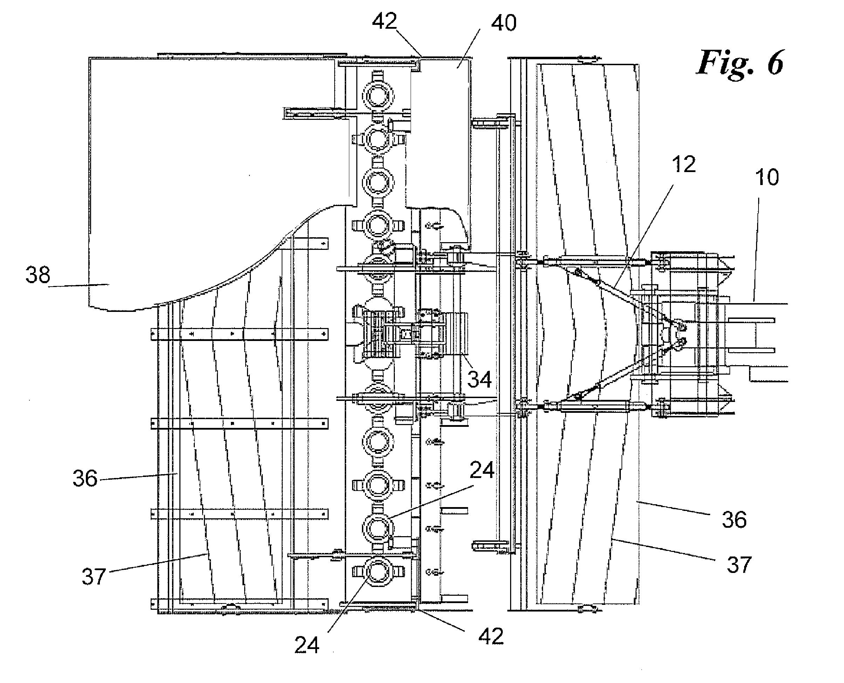

The complete apparatus 1 is capped by an upper shell (which consists here of rubber covers 38, 40, represented partly ripped-off in Fig. 5 and 6) and equipped with two lateral protective steel plates 42 affixed at both sides of the injection tool 1. Those plates 42 cut into the sediment 6 to the same level as the rotation teeth 26 of the rotary harrows 24. The combination of the lateral plates 38, the upper shell and the position of the rolls 36 over the whole width of the injection tool 1 do limit to a minimum suspension of the sediment in the water. This upper shell 38, 40 ought not being watertight: its mere aim is to reduce the kinetic energy of particle whipped up by the harrows 24 so as to ensure their quick re-sedimentation.

The present apparatus for active compound delivery into sediments of the invention is straightforward, effective and limits application costs due to precise dosage of active products with optimized rheological properties and accurate positioning of the sediment mixing front; it works in a continuous mode and can be upscaled to various industrial applications. The invention is especially adapted for the following applications:
- Injection of biological formulations, bacterial mixtures, polymers, suspensions, sludges, nutrients, minerals, chemicals for in situ detoxification of sediments contaminated by heavy metals, polychlorinated biphenyls, pesticides, organochlorides;
- Injection of slow-release oxygen formulations to oxidize organic materials in sediments to allow volume reduction of the sediment;
- In situ detoxification and degradation of sediment compounds in zones and banks of rivers, estuaries, lakes, harbours and waterways.

It will be appreciated by persons skilled in the art that the present invention is not limited by what has been particularly shown and described hereinabove. The invention resides in each and every novel characteristic feature and each and every combination of characteristic features. Reference numerals in the claims do not limit their protective scope. Use of the verb "to comprise" and its conjugations does not exclude the presence of elements other than those stated. Use of the article "a" or "an" preceding an element does not exclude the presence of a plurality of such elements.

The present invention has been described in terms of specific embodiments, which are illustrative of the invention and not to be construed as limiting.

## Claims

1. An apparatus (1) for continuous injection of compounds into an underwater sediment volume (6) having an upper surface situated below the surface of a water body **characterized in that** it comprises:
- At least one mixing tank (8);
- At least one injection pump (10);
- At least one injection line (11);
- A main support member (4, 12);
- A framework (15) supporting a collection ramp (16) fitted with injection lines (18) and harrowing means (24);
- Bearing means (36) supporting the framework (15) above the sediment volume (6);
- Floating means (36) allowing the framework (15) to remain at the surface of the sediment volume (6)

2. An apparatus according to claim 1 **characterized in that** it is protected by an upper shell (38, 40) and two lateral steel plates (42) able to cut into the sediment surface.

3. An apparatus according to claim 2 **characterized in that** the upper shell (38, 40) comprises at least one rubber cap (38, 40).

4. An apparatus according to any one of claims 1 to 3 **characterized in that** it comprises heating means for heating the compound before its injection.

5. An apparatus according to any one of the precedent claims **characterized in that** the harrowing means (24) comprise a series of rotary harrows (24) with substantially vertical teeth (26).

6. An apparatus according to claim 5 **characterized in that** the rotary harrows (24) are placed in staggered rows.

7. An apparatus according to any one of the precedent claims **characterized in that** the bearing means (36) are rolls placed in front of and at the back of the framework (14).

8. An apparatus according to claim 7 **characterized in that** the rolls (36) are filled at least partially with a fluid whose density is lower than the density of water and constitute the floating means.

9. An apparatus according to any one of the precedent claims **characterized in that** the heating element is enclosed in each of the at least one mixing tank (8).

10. An apparatus according to claim 8 **characterized in that** each at least one mixing tank (8) is double-enveloped and contains a heat transfer fluid able to heat the product up to a temperature between 10 and 30°C.

11. An apparatus according to any one of the precedent claims **characterized in that** it is affixed aboard a floating vessel (2).

12. A process for curing underwater sediments **characterized in that** it comprises the following operations:
- mixing, homogenizing and heating a compound comprising at least one active product so as to obtain optimal rheological properties, viscosity and pumpability of the compound;
- providing a mobile injection apparatus (1) able to be displaced along the surface of underwater sediments (6) to be cured;
- adjusting the floatability of the mobile injection apparatus (1) so that it will remain close to the surface of the underwater sediments (6);
- adjusting the position of bearing elements (36) borne by the mobile injection apparatus (1) so that the latter stays at a given distance above the surface of the underwater sediments;
- providing an injection line (11) extending between said mobile apparatus (1) and the surface of a water body;
- Pumping the mixed compound into the injection line (11);
- Injecting said compound into an upper layer of the sediments;
- stirring said upper layer with harrowing means (24) so as to obtain an intimate mixing of the sediment and of the active compound;

13. A process for curing underwater sediments according to claim 12 **characterized in that** the compound comprises at lest one active ingredient chosen amongst [biological formulations, bacterial mixtures, polymers, suspensions, sludges, nutrients, minerals, chemicals for in situ detoxification of sediments contaminated by heavy metals, polychlorinated biphenyls, pesticides, organochlorides, slow-release oxygen formulations to oxidize organic materials in sediments].

14. A process for curing underwater sediments according to either one of claims 12 and 13 **characterized in that** it comprises the following operation:
- taking various ingredients from secondary tanks and injecting them into a mixing tank so as to obtain an active curing compound.
